Europäisches Patentamt

European Patent Office

Office européen des brevets

(11) Publication number: **0 061 320**
**B1**

## EUROPEAN PATENT SPECIFICATION

(45) Date of publication of patent specification: **04.09.85**

(51) Int. Cl.⁴: **F 16 J 3/04,** F 16 D 3/84

(21) Application number: **82301424.6**

(22) Date of filing: **19.03.82**

(54) **Flexible sealing boot and ganged mold for its production.**

(30) Priority: **20.03.81 US 245810**

(43) Date of publication of application:
**29.09.82 Bulletin 82/39**

(45) Publication of the grant of the patent:
**04.09.85 Bulletin 85/36**

(84) Designated Contracting States:
**BE CH DE FR GB IT LI NL SE**

(56) References cited:
DE-A-1 952 765
FR-A-2 434 305
FR-A-2 448 667
US-A-1 922 431
US-A-2 897 840
US-A-3 137 215
US-A-3 403 603

SIMRIT-KATALOG, no. 310, "Faltenbälge",
October 1974, C. FREUDENBERG, Weinheim,
pages 2,4,12,20

(73) Proprietor: **The Gates Rubber Company
999 South Broadway P.O. Box 5887
Denver, Colorado 80217 (US)**

(72) Inventor: **Posiviata, Richard, W.
8414 West Iliff Lane
Lakewood Colorado 80227 (US)**
Inventor: **Johnston, Jonathan Arthur
10231 Monterey Circle
Denver Colorado 80221 (US)**

(74) Representative: **Carpmael, John William
Maurice et al
CARPMAELS & RANSFORD 43 Bloomsbury
Square
London, WC1A 2RA (GB)**

Courier Press, Leamington Spa, England.

## Description

This invention relates to corrugated flexible boots, and more particularly boots adapted to enclose and seal a mechanical joint, and generally subject to axial and/or angular rotative displacement.

Front-wheel drive vehicles employ a drive shaft assembly comprised of two half-shafts each including inboard and outboard constant velocity universal joints (e.g. of the type disclosed in US—A—3464232). Joint plunge and articulation (e.g. typically up to 40 degrees) while torque is being transmitted from the half-shaft through the joint pose a set of difficult requirements for the annularly corrugated flexible boot seals. Generally, the flexible boots must possess sufficient resistance to radial expansion during high speed spin to ensure dynamic stability (and necessary clearance with adjacent automotive parts), withstand dynamic flexure at cold temperature, have adequate abrasion and tear resistance to ensure the integrity of the seal, possess good heat resistance, and the like.

The prior art constant velocity joint sealing boots have been formed of an annularly corrugated injection molded all rubber ("gum") tapered boot, of the type shown in US—A—3646778. The commercially available sealing boots for these joints typically have a reduced neck which attaches to the half-shaft, and an enlarged mouth usually of at least three times the diameter of the reduced neck, which affixes to the constant velocity joint. The wall thickness of the seal, particularly along the corrugations, averages typically 2.67 mm.

The prior art gum seal has been less than fully satisfactory. In practice, it has proved extremely difficult to produce sealing boots which will pass both the high speed spin requirement and cold flex requirement imposed by environmental conditions known to the car manufacturers. In one such spin test the boot must have sufficient modulus to exhibit less than the maximum allowed radial growth of seven millimeters when the joint is positioned at a 4° angle and spun at 2150 rpm. A boot having the required modulus and/or wall gauge to pass this test normally to too stiff in the wall corrugations to pass the flex test at minus 40°C. Similarly, if the wall gauge of the boot is reduced in thickness or the rubber modulus is reduced to achieve the flexibility needed to pass the cold flex test, the boot stiffness is reduced to where the boot balloons excessively during the high speed spin test. Special compounding techniques have been resorted to in an attempt to overcome this problem.

The conventional gum seal has also suffered from poor abrasion and tear resistance. Punctures due to mishandling by an automotive repairman, abrasion as the convolutions of the boot wear upon themselves during high angle operation of the boot, and tearing or puncturing from road hazards such as flying rocks have led to lubricant loss from the sealing boot and ruination of the constant velocity joint. Experience has shown that cracks or holes, once developed in the gum seal, tend to propagate to an extent that lubricant will be expelled by centrifugal force or leakage from the boot.

Moreover, while silicone rubber has good heat resistance (e.g. at 177°C) suited for the inboard seal, its poor tensile strength, abrasion and tear resistance have presented formidable problems requiring use of very expensive silicone polymers for the inboard boots. Similarly, silicone boots have been unsuitable for use at the outboard seal despite possessing the desirable cold flex properties needed for the outboard application.

US—A—1922431 describes a flexible boot for a propeller shaft universal joint having embedded non-extensible cords and an outer rubberized cross-woven fabric covering to reinforce the boot. The spirally corrugated boot is formed by plying up rubber, cord and rubberized fabric layers over a spiral corrugated core which, upon vulcanization, can be removed from the product by unspiralling. The lift ratio (ratio of major to minor diameter of the boot) is low, and by using cross-woven fabric plied up on the product there will inherently be formed a joint or splice longitudinally of the product. This will produce an eccentricity creating variations in flexural modulus and dynamic balance, since flexing will be unsymmetrical under torsional loading.

Among the objects of the invention are to provide a lightweight, high lift ratio corrugated boot adapted to enshroud a mechanical joint, and which has uniform flexural modulus, good abrasion tear and crack propagation resistance, which can be made from a large selection of polymeric stocks including lower cost silicone as the base material, which is suitable to serve as either the inboard or outboard constant velocity joint grease seal, as well as serving many other applications requiring a corrugated boot. It is another object to provide a boot which will pass both the high speed spin test and cold flex test for constant velocity outboard joint grease seals. These and other objects will be made apparent from a reading of the following specification.

In one aspect, the invention comprehends a corrugated flexible boot adapted to enshroud a mechanical joint, including a corrugated polymeric body diverging from a reduced neck at one end of the body through troughs and crests of the corrugations to an enlarged mouth at the other end, the body being reinforced with a fabric material the woven reinforcement being of a knitted material which is adapted to stretch radially and the reinforcement being completely embedded in the wall.

In another aspect, the invention comprehends a flexible boot adapted to bridge across and seal a mechanical joint, including a molded annularly corrugated elastomeric thin walled body diverging from a reduced neck at one end of the body through troughs and crests of the corrugations to an enlarged mouth at the other end; and a continuous non-jointed tubular knit fabric reinforcement embedded in the wall of the body, having greater openness and having undergone a greater degree of radial stretching at a crest of the corrugations as compared with an immediately adjacent trough of the corrugation.

In another aspect, the invention is directed to a ganged mold for producing attached pairs of the aforementioned flexible corrugated boots, including: a first mold half body with two cavities interconnected, in longitudinal section defined by (1) spaced, oppositely tapering corrugated ramp portions, (2) substantially straight end portions extending outwardly from the ramp portions, and (3) a medial portion merging together the ramp portions; a second such mold half body; said first and second mold bodies adapted to be closed together to define a central cavity therebetween.

The invention will be more particularly described in its preferred embodiments by reference to the accompanying drawings, in which like numerals designate like parts, and in which:—

FIGURE 1 illustrates a two-cavity mold of the invention in which is contained at the left side a partial cutaway, partially sectioned tubular preform (of exaggerated wall thickness) prior to molding, and the right side illustrating the flexible boot of the invention partially cut away and in section, after having been molded;

FIGURE 2 is an enlarged view taken along line 2—2 of Figure 1 and similar thereto, in which a portion of the outer elastomeric cover is broken away for illustration of the reinforcement;

FIGURE 3 shows the flexible boot of the invention installed as a grease seal on an outboard constant velocity joint for a front-wheel drive automobile;

FIGURE 4 is a schematic partial view of one preferred fabric used as reinforcement in the boot;

FIGURE 5 is a schematic end view (looking down the axis) of the tubular fabric of Figure 4, and

FIGURE 6 is a partial sectional view of a wall of an alternative boot configuration.

For illustration purposes only, the illustrated flexible boot of the invention is designed to enshroud a constant velocity joint coupled to a half-shaft of a front-wheel drive shaft assembly. It will be appreciated that the boot of the invention may serve various other applications where a lightweight, flexible and durable boot configuration is needed to couple mechanical parts of disparate outside dimensions.

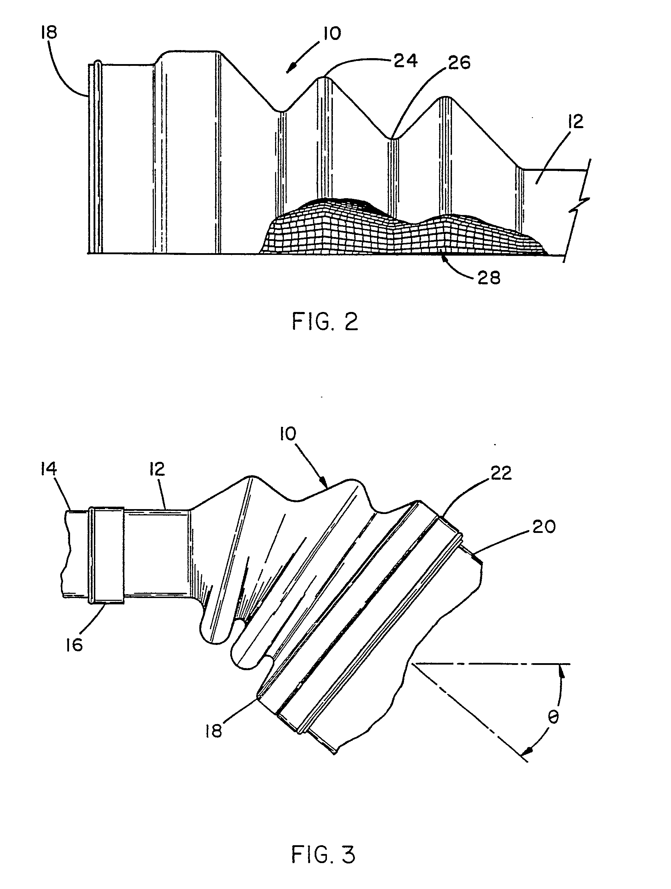

Referring first to Figure 3, the flexible boot generally shown at 10 sealingly encloses a constant velocity outboard universal joint of the type, for instance, shown in the aforementioned U.S. Patent No. 3646778. The bellows-like boot is attached at its reduced neck 12 to a half-shaft 14 tightly with the aid of clamping ring 16. Similarly, the enlarged mouth portion 18 of the flexible boot is sealingly attached to the constant velocity joint housing 20, with circular sealing clamp 22. Grease or other lubricant is contained within the boot. In the case of this illustrated outboard joint, torque is transmitted from half-shaft 14, through the constant velocity joint at an included angle θ of up to about 40°, which is coupled to the front wheels of the vehicle.

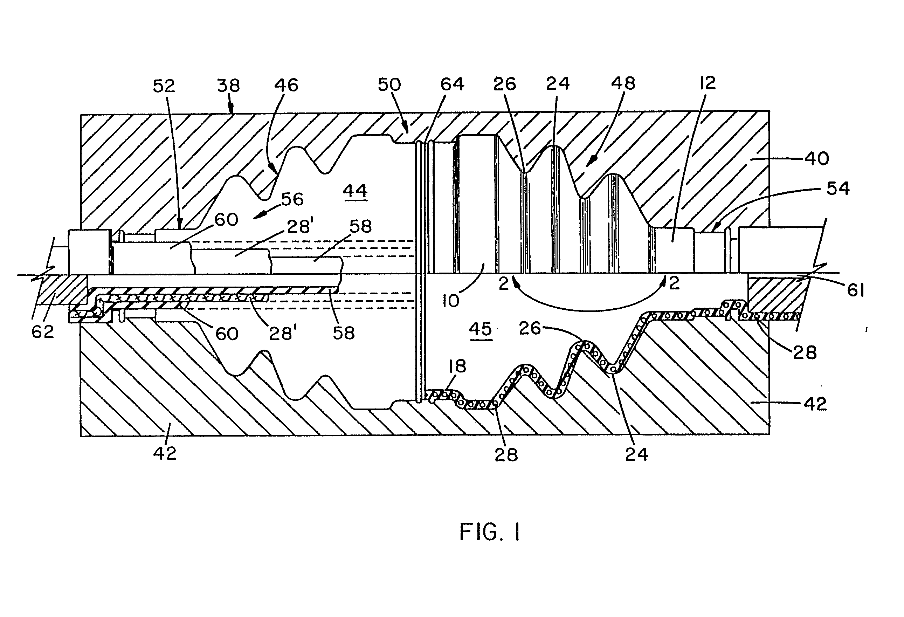

As shown best in Figures 1 and 2, the boot 10 has an annularly corrugated polymeric body consisting of crests 24 and adjoining troughs 26. The ramp angles of each corrugation may be chosen as desired. This corrugated body diverges or tapers from a minimum dimension at the reduced neck portion 12 within a generally conical envelope to a maximum dimension at or near mouth 18. The ratio of the maximum outside dimension of the boot to its minimum outside dimension is preferably at least about 1.5:1, more preferably at least about 2:1, and most preferably at least about 3:1. These dimensions pertain to those portions of the boot which are reinforced, as discussed hereinbelow.

In accordance with the invention, the wall of the flexible boot is reinforced with a continuous non-jointed tubular fabric 28 which forms a unitary reinforcement with the body, and intimately follows the troughs 26 and crests 24 of the corrugations. The tubular fabric layer is bonded either through mechanical captivation, by chemical bonding, or both to the polymeric body. While the material used for the polymeric body will be chosen to meet the particular mechanical and environmental influences characteristic of the application, thermoplastic and elastomeric materials are generally preferred, including natural and synthetic rubbers, theremoplastic elastomers, and the like. Materials highly suitable for boots for constant velocity joint applications include neoprene, silicone rubber, polyesters (e.g. Hytrel, a trademark of the Du Pont Company), a nitrile. Of course, in practice the polymeric base material may be compounded with other polymers as well as suitable fillers, reinforcing agents (e.g., carbon black), curatives, extenders, accelerators and the like.

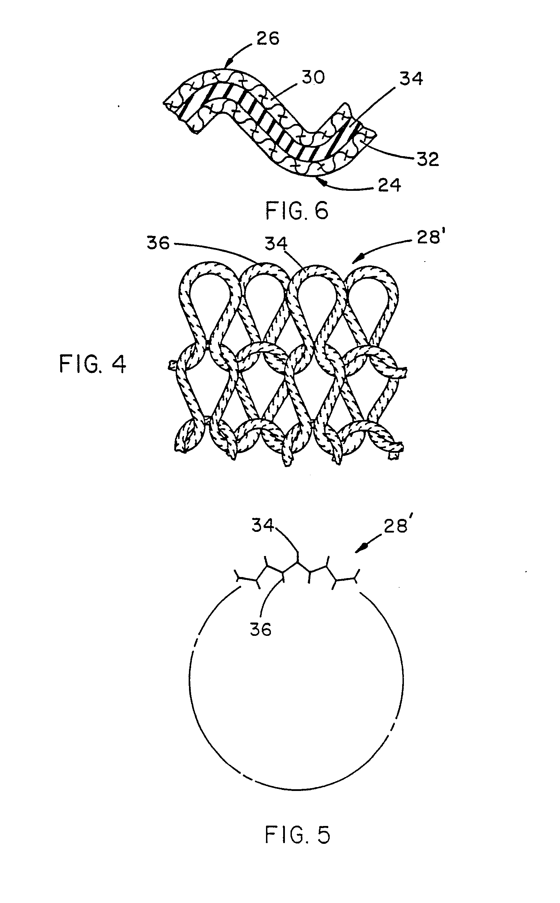

While for many applications it is preferred that the tubular reinforcement layer 28 be fully embedded within the body of the boot, present in one or more layers as required, it is also possible to place the reinforcing layer or layers at an exterior surface of the body. As shown in Figure 6, for instance, both the inner and outer surfaces of the boot carry respective reinforcement layers 30, 32, sandwiching an inner polymeric layer 34 to which the layers are bonded. The reinforcement layers 30 and 32 may be impregnated (e.g. by calendering) with an elastomer or the like, as required.

By use of a continuous non-jointed tubular fabric reinforcement it is possible substantially to reduce the normal wall thickness or gauge of the body of the boot, particularly along the corrugations, without sacrificing the strength, flexural properties, dynamic stability abrasion or penetration resistance of the boot, and in fact in most cases these properties are actually enhanced despite the thinner wall gauge. Generally speaking, the average thickness of the (reinforced) wall of the corrugation is preferably no greater than about 2.5 percent of the maximum outside dimension of the boot, and more preferably is no greater than about 2.0 percent of the maximum outside dimension of the boot.

It is critical that the tubular fabric be formed of a material which, in its unstretched state, has the capacity to expand considerably in the radial direction, as determined by the ratio of the maximum outer dimension to the minimum outer dimension of the boot. Thus, the fabric may be subjected to lift ratios of greater than 2:1 or 3:1, for instance. Generally speaking, various fabric configurations, such as stretch fabrics or low angle tubular braids of low pack can be utilized, and/or fabrics having stretchability directly built into the yarn (e.g. by utilizing texturized or elastic yarns of nylon, polyester, aramid fibre, and high elongation fibres such as spandex). It is highly preferred, however, to employ tubular knits.

As previously discussed, the tubular knit should have a radial elasticity consistent with the lift ratio required by the boot configuration. Circular knits which in general have the required elasticity include rib fabrics such as the 1- and -1 or plain rib fabric shown in Figure 4, which illustrates a four wale by three course fabric segment 28' of a continuous tubular, non-jointed fabric (Figure 5). As is well known with the plain rib fabric, the loops in any two consecutive wales are drawn opposite one another so that one wale 34 has a loop drawn to the face while the adjacent wale 36 has its loop drawn to the back. This type of rib fabric, as contrasted with plain or jersey stitch knits, may undergo large radial expansions. Lock stitch knits may also be used advantageously, because they prevent knit fabric runs in the manufacture of the reinforced seal.

It is important that the continuous tubular fabric be free of joints, overlaps, or selvages, which would otherwise introduce eccentricity in the boot and destroy its symmetrical flexing properties under torsional loading. Simply put, by using a continuous, non-jointed tubular reinforcement the boot seal is dynamically balanced and has a uniform flexural modulus.

Of course, the circular knits and particularly the rib fabrics are well known per se. Open mesh stockinette circular knits (plain stitch) are also well known, and have been used, for instance, to reinforce flexible radiator hose (see, for instance, F. T. Roberts et al U.S. Patent No. 2897840 and Roberts U.S. Patent No. 2936812).

As those experienced in the art of knitting are well aware, tensile strength can be increased by altering yarn tenacity and increasing denier (increases loop tenacity at the stitch). Tensile strength can also be increased by changing the knitted fabric density (i.e. number of courses and/or wales to the cm).

Another important feature is control of the flexing properties of the boot by varying the cover factor of the reinforcement along the corrugation profile. It has been found that by selectively stiffening the trough areas 26 relative to the crest areas 24, the boot will resist collapse when bent at high angles (as shown in Figure 3), ensuring that adjacent corrugation sidewalls are maintained spaced apart (or just touching), to minimize abrasion during use. This is attained by increasing the cover factor (smaller interstitial spacing) of the knit reinforcement in the troughs vis-a-vis a reduced cover factor (more openness) at the crests, as illustrated in Figure 2.

Referring again to Figure 1, the preferred apparatus for producing the corrugated boots of the invention is shown. It consists of ganged mold 38 composed of hermaphroditic mold pairs 40 (upper) and 42 (lower). Each mold half contains adjacent, interconnected half cavities. Each mold half is further defined by oppositely tapering corrugated ramp portions 46, 48, spaced apart by a bridging medial portion 50, which is of lesser contour than the tapered ramp portions, and which is generally concentric with respect to the axis of the mold. Each mold half also contains substantially straight end portions 52, 54 extending endwise from the ramp portion and forming the reduced neck surface of the boot. As assembled, the first and second mold bodies 40, 42 define the aforementioned central cavity (i.e. left cavity 44 together with right cavity 45). In contrast, prior art molds have employed a single cavity in which a contoured mandrel or core is placed, for defining an annular cavity for molding of the product (unreinforced), for instance by injection molding. Compression molding may also be employed, with the product having been built up on the mandrel prior to insertion in the mold.

Although the corrugated boot of the invention may be produced by various known processes which are adapted to ensure placement of the reinforcement in the wall of the boot, such as injection molding or plying up on a mandrel, it is preferred to employ the mold apparatus shown in Figure 1. A preform shown generally at 56 is blow molded, with or without an interior mandrel or bladder, against the interior mold surface (52, 46, 50, 48, 54). As shown in the left side of Figure 1, the preform for producing the finished boot shown in the right side of Figure 1 with reinforcement layer 28 embedded in the wall thereof, includes a tubular heat setting core member 58 which may be an extruded vulcanizable rubber tube for instance, a continuous nonjointed tubular fabric 28' telescoped over core 58, and an outer heat setting polymeric cover 60 telescoped over the tubular reinforcement.

The preform 56 may be formed in any known manner, including hose building techniques, and forms no part of the invention. The thickness of the core 58 and/or cover 60 may be varied along their length, to obtain the desired wall thickness in the final product. A suitable process, however, involves placement of the preform along the full axis of the two-cavity mold 38, applying appropriate end caps 62 in the ends of the mold, and introducing a supply of inflating medium (e.g. steam) to the interior of the tube 58 via opening 61. Preform 56 is thereby radially expanded (outwardly) against the mold surface. As the preform is thus held against the molding surface the material is set. In the case where the body of the flexible boot is formed of vulcanizable materials, heat and pressure are supplied to the mold, e.g. through heated platens (not shown), to heat set the pair of boots into the final form shown at the right side of Figure 1. The mold may then be opened, the end caps removed, and the product recovered. Individual boots are then obtained by slitting at 64, in a plane transverse to the axis of the boot, and the ends trimmed.

The following examples further illustrate the flexible boots of the invention and compare their performance against a typical commercially available standard.

### Examples
1. High-speed spin (tests dynamic stability).

In this test sealing boots were clamped onto the standard outboard joint and axle shaft assembly of a General Motors X-car, and filled with 70—80 grams of grease specified by the manufacturer.

The joint was positioned at a 4° angle (see Figure 3) and spun at 1200 rpm for two minutes to distribute the grease, and then brought to rest. The speed was then gradually increased from rest until the boot ballooned centrifugally 7 mm outward from the static position. The rpm levels were recorded at the 7 mm growth. The manufacturer's specification calls for a minimum 2150 rpm (equivalent to 225 km/h) before 7 mm growth is reached.

Conventional (commercially available) all gum boots made of neoprene rubber and having a wall thickness of about 2.6 mm were tested in accordance with the above procedure and found to undergo 7 mm growth at speeds between 2000 and 2800 rpm.

Four reinforced boots of the invention formed of the same neoprene stock as the all gum boots (above) were constructed with a wall thickness of about 1.78 mm. The boots closely resembled the boot design of Figure 1 with the exception that the reinforcement, which consisted of a 200 denier filament nylon locked rib stitch tubular knit in the first two boots, and 14/1 spun nylon locked rib stitch low basis weight tubular knit in the second two boots, was positioned at the outside surface of the boot, and bonded to the body. The boots were tested in accordance with the above procedure and found to undergo 7 mm growth at speeds of 2490, 2420, 2570 and 2510 rpm respectively. The same construction with the exception that the 200 denier filament nylon tubular knit was placed on the inside surface of the boot yielded 2110 rpm at 7 mm growth.

Two additional 1.78 mm thickness boots of the invention were constructed like the above except that silicone elastomer was substituted for neoprene. In the first boot the tubular knit, a 14/1 spun nylon locked rib stitch of low basis weight, was placed on the inside of the boot, and yielded 2940 rpm before 7 mm growth. In the second boot, the same tubular knit was employed, except that two layers were present. The first layer was positioned on the inside surface, and the second layer embedded within the wall of the boot body. This boot yielded 3460 rpm before 7 mm growth.

2. Cold test (tests flexibility in cold)

As in the high speed spin test, the boots (employing the spun nylon knit described above) were clamped onto a joint with 70—80 grams of grease inserted, and spun at 4° at 1200 rpm for two minutes at room temperature, to distribute the grease. The joint was then fixed at 38°—39° and placed in a cold box (−40°C maximum) for 16—18 hours.

The joint and boot were then rotated at 250 rpm for ten seconds at −40°C, and subsequently examined for cracks, grease leakage, movement on the joint and abrasion.

It has been found that the conventional all gum boots that pass the high-speed spin test usually have too high a modulus to pass the cold test; conversely those all gum boots made from low enough modulus compounds to pass the cold test usually balloon out at high speed. Specialized compounding is normally required in addition to modulus adjustment before both tests can be expected to be passed.

Properly installed reinforced sealing boots of the invention, of the type described in the high-speed spin test above, have passed the cold test without cracking, leaking grease, or slipping underneath the clamps, and without the need for specialized compounding.

3. ASTM D624 (tear resistance of rubber) — Test specification incorporated by reference.

A razor-nicked crescent specimen with tab ends (Die B) was used, and the rate of extension of the grip was 500 plus or minus 50 mm.

The control sample, consisting of neoprene gum stock used in the conventional gum boot, had a tear strength of 46.4 kilonewtons/meter (calendered with the grain). For a 2.6 mm thick gum sample, corresponding to the actual boot wall thickness, the force necessary to tear is 120.2 newtons. The knit-reinforced neoprene sample (using a medium basis weight spun nylon locked rib stitch knit) corresponding to the material used in the boot of the invention, had a tear strength of 86.8 kilonewtons/meter across the ribs and 94.1 kilonewtons/meter with the ribs of the knit (i.e. the knit improved the tear strength 87—103 percent). For a 1.78 mm thick knit reinforced sample, corresponding to the design thickness of the reinforced boot, the force necessary to tear is 154.3 newtons (a 28 percent improvement over the thicker section gum sample).

4. Drop ball test (resistance to "falling ball" type impact).

A plunger of variable weight (250—370 grams) which has a 16 mm diameter ball on one end is dropped onto a rubber sample backed by a steel plate. The minimum height that the plunger has to be dropped from to just rupture the sample is

measured, and the associated energy is calculated.

A 2.6 mm thick neoprene all gum sample required an average energy of $2.67 \times 10^7$ ergs to rupture; a 1.78 mm thick all gum sample required $1.65 \times 10^7$ ergs. A 1.78 mm knit reinforced (same knit as in No. 3 above) neoprene sample required an average energy of $2.65 \times 10^7$ ergs to rupture (the same as the thicker gum sample within experimental error).

5. Grease leakage and hole propagation test.

Knit reinforced 1.78 mm thick neoprene boots and 2.6 mm thick all neoprene gum boots were punctured at various locations along the corrugations, and then spun at various joint angles and speeds and grease loss measured. The knit was the 14/1 spun nylon locked rib stitch low basis weight tubular knit. The results of the test were inconclusive.

The all gum boot lost substantially less grease than the reinforced boots when the boots were punctured (i) in the root of the large convolution and spun at high speed, low joint angle, and (ii) in the top of the large convolution and spun at low speed, high joint angle. Conversely, the knit reinforced boot of the invention lost substantially less grease than the thicker all gum boot when the boots were punctured on the large convolution and spun at high speed, low joint angle. In all of the tests none of the boots evidenced measurable crack growth.

6. ASTM D813 (crack growth) — Test specification incorporated by reference.

The DeMattia flexing machine was used to flex the samples at room temperature through 130° each cycle. The samples had been pierced in the middle of the groove with a 2 mm wide tool. The samples were flexed at 300 cylces per minute.

The all neoprene gum samples sustained 0.63 mm average crack growth per one million flex cycles. The knit-reinforced (same knit as in No. 3 above) neoprene samples sustained 0.43 mm average crack growth per one million flex cycles. For comparison 90 million flex cycles corresponds to approximately 160,000 km on an automobile.

7. Flex Fatigue

All gum and knit-reinforced boots of the type described in the high-speed spin test (14/1 spun nylon locked rib stitch low basis weight tubular knit) were spun at 2000 rpm at a constant joint angle of 20°. The reinforced boots of the invention had very noticeably superior dynamic stability, with much lower radial excursion.

**Claims**

1. A corrugated flexible boot adapted to enshroud a mechanical joint, comprising a corrugated polymeric body (10) diverging from a reduced neck (12) at one end of the body through troughs (26) and crests (24) of the corrugations to an enlarged mouth (18) at the other end, the body being reinforced with a fabric material characterised by this, that the corrugated flexible boot is particularly adapted for use with constant velocity joints such that in use it is spun at high speed and subjected to dynamic loads, the woven reinforcement being of a knitted material which is adapted to stretch radially and the reinforcement (28) being completely embedded in the wall.

2. An annularly corrugated flexible boot according to claim 1 characterised in that the reinforcement is of a continuous non-jointed tubular fabric.

3. A flexible boot according to claim 1 or 2, characterised in that the ratio of the maximum outside dimension to the minimum outside dimension of the fabric-reinforced body is at least about 1.5:1.

4. A flexible boot according to claim 1, 2 or 3 characterised in that the elastomeric body is defined by a thin (reinforced) wall along the corrugations, the average thickness of the wall being no greater than about 2.5 percent of said maximum outside dimension.

5. A flexible boot according to any one of claims 1—4 characterised in that the fabric reinforcement is tubular knit, having reduced cover factor at said crests (24) compared with greater cover at said troughs (26) of the corrugations.

6. A flexible boot according to claim 2 wherein the ratio of the maximum outside diameter to the minimum outside diameter of the fabric-reinforced body (10) is at least about 2:1.

7. A flexible boot according to any one of the preceding claims characterised in that the ratio of the maximum outside dimension to the minimum outside dimension of the fabric-reinforced body (10) is at least about 3:1.

8. A flexible boot according to any one of the preceding claims characterised in that the fabric (28) is positioned substantially at the outer surface of the corrugations.

9. A flexible boot according to any one of claims 1—7 characterised in that the fabric (28) is embedded in the wall of the body (10).

10. A flexible boot according to any one of the preceding claims which is adapted to bridge across and seal a mechanical joint and is formed by molding, characterised in that the knit fabric reinforcement (28) has greater openness and has undergone a greater degree of radial stretching at a crest (24) of the corrugations as compared with an immediately adjacent trough (26) of the corrugation.

11. A boot according to any one of the preceding claims characterised in that it comprises first and second non-jointed tubular fabric reinforcements (30, 32) unitary with and bonded to the body (10).

12. A ganged mold for producing attached pairs of flexible corrugated boots as claimed in any one of the preceding claims comprising a first mold half body (40) with two cavities (44, 45) interconnected, in longitudinal section defined by firstly spaced, oppositely tapering corrugated ramp portions (46, 48), secondly substantially straight end portions (52, 54) extending outwardly from the ramp portions (46, 48), and thirdly a medial portion (50) bridging together the ramp portions (46, 48), a second such mold half body (42), and wherein said first and second mold bodies (40, 42) are adapted to be closed together to define a central cavity therebetween.

**Revendications**

1. Manchon flexible ondulé conçu pour envelopper un joint mécanique, comprenant un corps polymérique ondulé (10) divergeant d'un col réduit (12) à une première extrémité du corps vers une embouchure élargie (18) à l'autre extrémité en passant par des creux (26) et des crêtes (24) des ondulations, le corps étant armé d'une étoffe, caractérisé en ce que le manchon flexible ondulé est particulièrement adapté à une utilisation avec des joints à vitesse constante de manière que, lors de l'utilisation, il soit mis en rotation à vitesse élevée et soumis à des charges dynamiques, l'armature tissée étant un tricot qui est conçu pour s'étirer radialement et l'armature (28) étant complètement noyée dans la paroi.

2. Manchon flexible ondulé annulairement selon la revendication 1, caractérisé en ce que l'armature est en étoffe tubulaire continue sans joint.

3. Manchon flexible selon la revendication 1 ou 2, caractérisé en ce que le rapport de la dimension extérieure maximale à la dimension extérieure minimale du corps armé d'étoffe est d'au moins environ 1,5:1.

4. Manchon flexible selon la revendication 1, 2 ou 3, caractérisé en ce que le corps élastomérique est défini par une mince paroi (armée) le long des ondulations, l'épaisseur moyenne de la paroi n'étant pas supérieure à environ 2,5% de ladite dimension extérieure maximale.

5. Manchon flexible selon l'une quelconque des revendications 1—4, caractérisé en ce que l'armature d'étoffe est un tricot tubulaire présentant un facteur de recouvrement réduit auxdites crêtes (24) par rapport au recouvrement plus grand auxdits creux (26) des ondulations.

6. Manchon flexible selon la revendication 2, dans lequel le rapport du diamètre extérieur maximal au diamètre extérieur minimal du corps (10) armé d'étoffe est d'au moins environ 2:1.

7. Manchon flexible selon l'une quelconque des revendications précédentes, caractérisé en ce que le rapport de la dimension extérieure maximale à la dimension extérieure minimale du corps (10) armé d'étoffe est d'au moins environ 3:1.

8. Manchon flexible selon l'une quelconque des revendications précédentes, caractérisé en ce que l'étoffe (28) est positionnée sensiblement à la surface extérieure des ondulations.

9. Manchon flexible selon l'une quelconque des revendications 1—7, caractérisé en ce que l'étoffe (28) est noyée dans la paroi du corps (10).

10. Manchon flexible selon l'une quelconque des revendications précédentes, qui est conçu pour s'étendre au-dessus d'un joint mécanique et pour le protéger de façon étanche et qui est formé par moulage, caractérisé en ce que l'armature (28) en étoffe tricotée présente une plus grande ouverture et a subi un degré plus élevé d'étirement radial à une crête (24) d'ondulation qu'à un creux immédiatement adjacent (26) de l'ondulation.

11. Manchon selon l'une quelconque des revendications précédentes, caractérisé en ce qu'il comprend des première et seconde armatures en étoffe, tubulaires sans joint (30, 32), solidarisées et liées au corps (10).

12. Moule à plusieurs empreintes pour la production de paires reliées de manchons ondulés flexibles selon l'une quelconque des revendications précédentes, comprenant un premier corps (40) de demi-moule présentant deux cavités (44, 45) reliées entre elles, en section longitudinale définies, premièrement, par des parties en rampes ondulées espacées (46, 48) d'inclinaisons opposées, deuxièmement par des parties extrêmes sensiblement droites (52, 54) s'étendant vers l'extérieur des parties en rampes (46, 48), et troisièmement par une partie médiane (50) reliant entre elles les parties en rampes (46, 48), un second corps (42) d'un tel demimoule, et dans lequel lesdits premier et second corps (40, 42) du moule sont conçus pour être fermés l'un contre l'autre afin de définir entre eux une cavité centrale.

**Patentansprüche**

1. Gewellte, flexible Schutzkappe zur Umschließung eines mechanischen Gelenkes, bestehend aus einem gewellten Polymerkörper (10), der von einem verengten Halsteil (12) an einem Ende des Körpers über Rillen (26) und Rippen (24) der Wellungen zu einer vergrößerten Mündung (18) am anderen Ende divergiert und der mit Textilmaterial verstärkt ist, dadurch gekennzeichnet, daß die gewellte, flexible Schutzkappe insbesondere der Verwendung bei mit gleichförmiger Geschwindigkeit bewegten Gelenken angepaßt ist, bei der sie hohen Drehgeschwindigkeiten und dynamischen Belastungen ausgesetzt ist, daß die gewirkte Verstärkung aus einem radial dehnbaren Gestrick besteht und daß die Verstärkung (2) vollständig in die Wand eingebettet ist.

2. Ringförmige gewellte, flexible Schutzkappe nach Anspruch 1, dadurch gekennzeichnet, daß die Verstärkung aus kontinuierlicher verbindungsstellenfreier Schlauchware besteht.

3. Flexible Schutzkappe nach Anspruch 1 oder 2, dadurch gekennzeichnet, daß das verhältnis der größten Außenabmessung zur kleinsten Außenabmessung des textilverstärkten Körpers wenigstens etwa 1,5:1 beträgt.

4. Flexible Schutzkappe nach Anspruch 1, 2 oder 3, dadurch gekennzeichnet, daß der Elastomerkörper längs der Wellungen von einer dünnen (verstärkten) Wand begrenzt ist, deren Durchschnittsstärke nicht größer als etwa 2,5% der größten Außenabmessung ist.

5. Flexible Schutzkappe nach einem der Ansprüche 1 bis 4, dadurch gekennzeichnet, daß die Textilverstärkung aus schlauchförmigem Gestrick besteht, dessen Abdeckfaktor an den Rippen (24) im Vergleich zu vermehrter Abdeckung an den Rillen (26) der Wellungen verringert ist.

6. Flexible Schutzkappe nach Anspruch 2, bei der das Verhältnis des größten Außendurchmessers zu dem kleinsten Außendurchmesser des textilverstärkten Körpers (10) wenigstens etwa 2:1 beträgt.

7. Flexible Schutzkappe nach einem der vorangegangenen Ansprüche, dadurch gekennzeichnet, daß das Verhältnis der größten Außenabmessung zu der kleinsten Außenabmessung des textilverstärkten Körpers (10) wenigstens etwa 3:1 beträgt.

8. Flexible Schutzkappe nach einem der vorangegangenen Ansprüche, dadurch gekennzeichnet, daß die Textilverstärkung (28) im wesentlichen an der Außenfläche der Wellungen angeordnet ist.

9. Flexible Schutzkappe nach einem der Ansprüche 1 bis 7, dadurch gekennzeichnet, daß die Textilverstärkung (28) in die Wand des Körpers (10) eingebettet ist.

10. Flexible Schutzkappe nach einem der vorangegangenen Ansprüche, die der Überbrückung und Abdichtung eines mechanischen Gelenkes dient und durch Formung gebildet ist, dadurch gekennzeichnet, daß die Maschenwarenverstärkung (28) an einer Rippe (24) der Wellungen größere Öffnungsweite aufweist und einem stärkeren Radialstreckungsgrad unterlag als bei einer unmittelbar benachbarten Rille (26) der Wellung.

11. Schutzkappe nach einem der vorangegangenen Ansprüche, dadurch gekennzeichnet, daß sie erste und zweite verbindungsstellenfreie schlauchförmige Textilverstärkungen (30, 32) aufweist, die einheitlich mit dem Körper (10) verbunden sind.

12. Doppelte Form zur Herstellung zusammenhängender Paare von flexiblen, gewellten Schutzkappen nach einem der vorangegangenen Ansprüche, bestehend aus einem ersten Formhalbkörper (40) mit zwei in gegenseitiger Verbindung stehenden Hohlräumen (44, 45), die im Längsschnitt begrenzt sind erstens von im Abstand liegenden entgegengesetzt verjüngten, gewellten Rampenabschnitten (46, 48), zweitens von im wesentlichen geraden Endabschnitten (52, 54), die von den Rampenabschnitten (46, 48) nach außen gerichtet sind und drittens von einem Mittelabschnitt (50), der die Rampenabschnitte (46, 48) miteinander verbindet; und aus einem zweiten derartigen Formhalbkörper (42), wobei der erste und der zweite Formkörper (40, 42) zur Bildung eines zentralen Hohlraumes zwischen diesen zusammenschließbar sind.

FIG. I

FIG. 2

FIG. 3

0 061 320

FIG. 6

FIG. 4

FIG. 5

3